Europäisches Patentamt

(19) European Patent Office

Office européen des brevets

(11) Publication number:

**0 083 184**
**B1**

(12) **EUROPEAN PATENT SPECIFICATION**

(45) Date of publication of patent specification: 03.06.87

(21) Application number: 82306777.2

(22) Date of filing: 20.12.82

(51) Int. Cl.⁴: **B 60 G 3/20,** B 60 G 15/06, B 60 G 11/16, B 60 G 11/28

(54) Independent rear wheel suspension.

(30) Priority: 24.12.81 US 334296

(43) Date of publication of application:
06.07.83 Bulletin 83/27

(45) Publication of the grant of the patent:
03.06.87 Bulletin 87/23

(84) Designated Contracting States:
DE FR GB

(56) References cited:
DE-B-1 101 181
DE-B-1 141 546
FR-A-2 005 171
US-A-2 179 856

PATENTS ABSTRACTS OF JAPAN, vol. 5, no.
119 (M-81)791r, 31st July 1981
Bussien, "Automobiltechnisches Handbuch",
Berlin 1979, pages 572-575

(73) Proprietor: FORD MOTOR COMPANY LIMITED
Eagle Way
Brentwood Essex CM13 3BW (GB)
㊸ GB

(73) Proprietor: FORD-WERKE
AKTIENGESELLSCHAFT
Ottoplatz 2 Postfach 21 03 69
D-5000 Köln 21 (DE)
㊸ DE

(73) Proprietor: FORD FRANCE SOCIETE ANONYME
344 Avenue Napoléon Bonaparte B.P. 307
F-92506 Rueil Malmaison Cedex (FR)
㊸ FR

(72) Inventor: Rumpel, Manfred
4494 Chamberlain Drive
Birmingham Michigan 48010 (US)

(74) Representative: Messulam, Alec Moses et al
A. Messulam & Co. 24 Broadway
Leigh on Sea Essex SS9 1BN (GB)

Courier Press, Leamington Spa, England.

## Description

This invention relates generally to independent wheel suspension systems for motor vehicles and more particularly to a strut type independent rear suspension for a front wheel drive vehicle, as specified in the preamble of claim 1, for example as disclosed on the vehicle Lancia Beta.

Rear suspension systems have been constructed to control the attitude of the rear wheels in order to provide particular handling characteristics of the motor vehicle, for example roll understeer or roll oversteer, as well as to provide a soft ride free from road vibrations. Handling characteristics such as roll understeer, roll oversteer or roll neutral steer during cornering of a motor vehicle are achieved by controlling the toe angle of one of the rear wheels during the jounce stroke of the suspension.

A vibration free ride is enhanced if the rear wheels are allowed to recess when the wheel hits a bump. However, both wheel recession and steering stability must be taken into account when designing a rear suspension. One way to take both factors into account is by controlling the toe angle of the wheel during its recession.

One way to control the toe angle of a wheel is with a suspension having two control arms substantially transverse to the longitudinal axis of the vehicle. The arms control the toe angle changes of the wheels as they shift position. However, previous usage of the two transverse control arms in combination with a strut suspension necessitated the spring element in the strut suspension to be mounted about the strut.

In many strut suspensions, the spring has been positioned away from the strut and interposed between a transverse control arm and the chassis so that the strut upper mount can be constructed from softer rubber, and so that valuable cargo space or engine compartment space can be maximized.

According to the present invention, there is provided an independent rear wheel suspension for a vehicle characterised in that a spring seat is located between said control arms and the suspension seats a compression spring interposed between said spring seat and said chassis, and pivot means extending through bushing means is secured within openings formed at the ends of upwardly extending arms of the spring seat, said pivot means pivotably connecting said spring seat to control arms so as to allow said control arms to move relative to said spring seat about a substantially vertical axis, said bushing means being constructed to allow pivotable movement of said spring seat about a substantially longitudinally extending axis, and to resiliently resist pivotable movement of said spring seat about a vertical axis and said spring seat being pivoted with respect the control arms such that the spring seat remains in a substantially horizontal position when the control arms undergo jounce and rebound movement.

Among the advantages offered by the invention are that it can provide for increased cargo or engine space, isolate vibration between the control arms and the coil spring, and allow the use of softer rubber in the strut upper mount. Furthermore, it provides the above features in a suspension that can be configured to provide roll understeer, roll oversteer, or roll neutral steer, as well as wheel recession.

The invention will now be described further, by way of example with reference to the accompanying drawings, in which:

Figure 1 is a rear elevational view, partly in section, of a motor vehicle incorporating independent rear wheel suspensions for its left and right rear wheels according to the invention,

Figure 2 is a plan and partially segmented view of the left rear wheel suspension shown in Figure 1,

Figure 3 is a view similar to Figure 2 showing the suspension during wheel recession,

Figure 4 is an enlarged rear elevational partially fragmented view of the rear wheel shown in Figure 2 during jounce,

Figure 5 is a view similar to Figure 4 showing the suspension system during rebound,

Figure 6 is a cross-sectional view taken along the line VI—VI shown in Figure 2,

Figure 7 is a cross-sectional view similar to Figure 6 of a second embodiment according to the invention,

Figure 8 is a cross-sectional view similar to Figure 6 of a third embodiment according to the invention, and

Figure 9 is a cross-sectional view similar to Figure 6 of a fourth embodiment according to the invention.

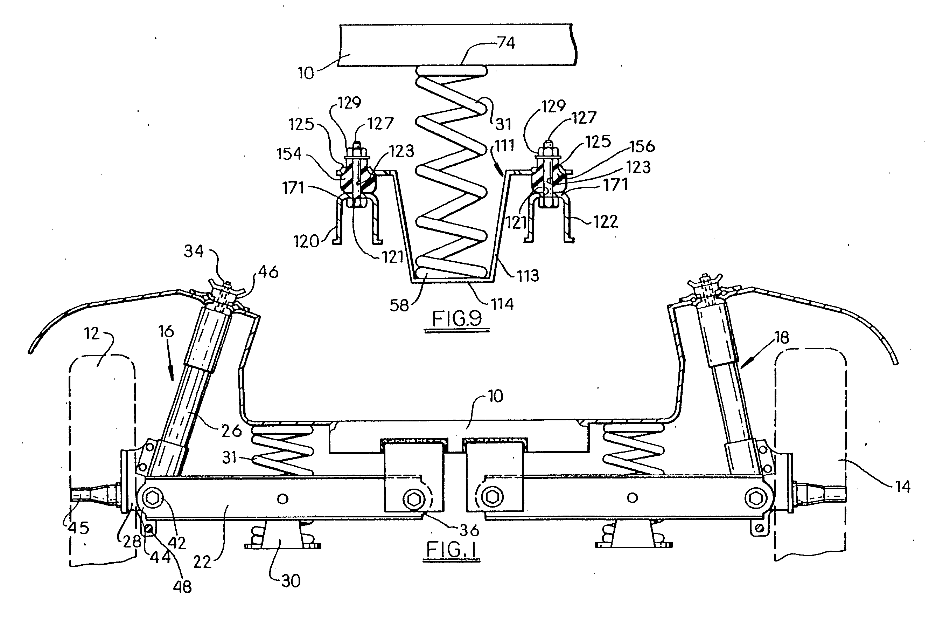

Referring now to Figure 1, a motor vehicle chassis (or unitized body and chassis) 10 is supported on left and right road wheels 12 and 14 by novel left and right independent wheel suspensions 16 and 18. Each wheel suspension 16 and 18 is identical except that one is a mirror image of the other; i.e., one is for the left side rather than for the right side. Since each independent suspension is the same, reference will only be made to the left wheel suspension 16.

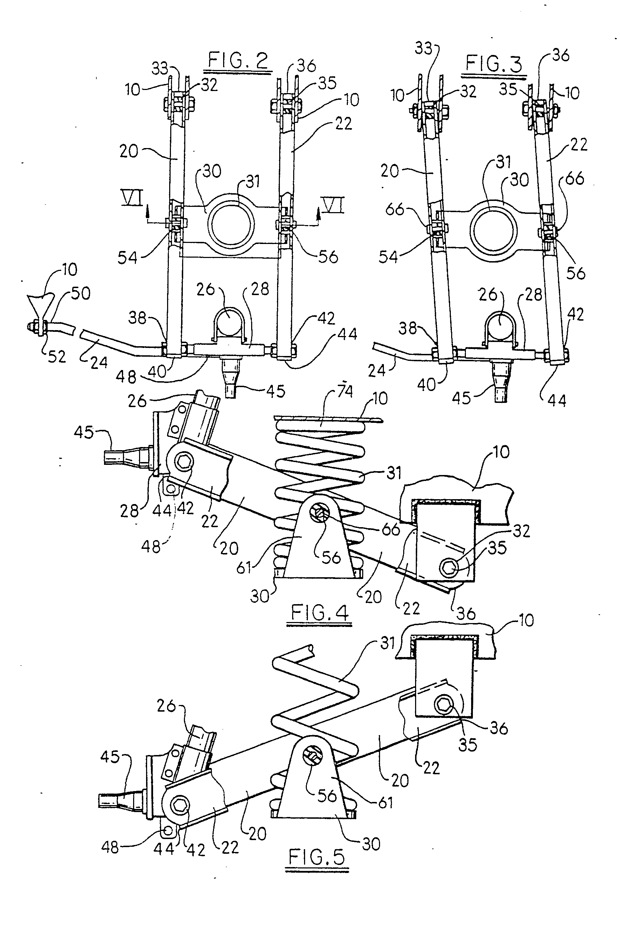

Generally, as shown in Figures 1 and 2, the wheel suspension 16 includes a front transverse control arm 20, a rear transverse control arm 22, trailing arm 24, and a telescopic strut 26 which connects a wheel support member 28 to the motor vehicle chassis 10. Means are provided to pivotably connect the inner ends of the arms 20, 22 to the chassis 10 and their outer ends to the wheel support member 28, as will be described. A spring seat bracket 30 is pivotably mounted to both arms 20 and 22 seats a coil spring 31 interposed between the seat 30 and chassis 10.

The front arm 20 has an elastomeric bushing 32 at its inboard end 33 which pivotably connects the arm 20 to the chassis 10. Similarly, the rear arm 22 has a similar bushing 35 at its inboard end 36 which pivotably connects the arm 22 to the chassis 10. An elastomeric bushing 38 pivotably connects the outboard end 40 of the front control arm 20 to the wheel support member 28. Similarly, a resilient bushing 42 pivotably connects outboard end 44 of the rear control arm 22 to the wheel support member 28.

The wheel support member 28 has an integral wheel spindle 45 which rotatably mounts wheel 12. The spindle 45 is positioned between the bushings 40 and 42. The wheel support member 28 is rigidly connected to the telescopic shock absorbing strut 26. The upper end 34 of the strut 26 is pivotably connected through a resilient upper mount 46 to the chassis 10.

The longitudinal trailing arm 24 is connected through an elastomeric bushing 48 to the wheel support member 28 and extends substantially forward therefrom. The arm 24 has its front end 50 resiliently connected through bushing 52 to the chassis 10.

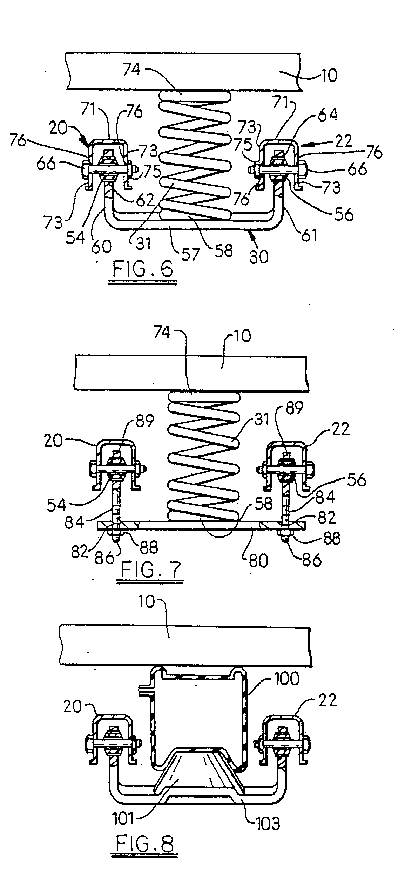

Referring now to Figures 2, 4 and 6, the spring seat bracket 30 is pivotably connected through elastomeric bushings 54 and 56 to the front control arm 20 and rear control arm 22, respectively, at a mid-position between the inboard ends 33 and 36 and outboard ends 40 and 44 of the two arms 20 and 22. The spring seat bracket 30, as shown in Figure 6, has a central seat 57 constructed to seat the lower end 58 of coil spring 31. The bracket 30 has two upwardly extending ends 60 and 61 which have apertures 62 and 64 therethrough which receive the elastomeric bushings 54 and 56 respectively. Each control arm 20 and 22 has a U-shaped cross-section with a top wall 71 and two depending side walls 73. The two side walls 73 are spaced apart to receive the ends 60 and 61 that house bushings 54 and 56. Bolts 66 pass through apertures 76 in the side walls 73 and through bushings 54 and 56 to pivotably connect bracket 30 to arms 20 and 22 respectively and are secured to the arms by nuts 75.

The top end 74 of coil spring 31 is seated against the chassis 10 so that the coil spring 31 normally exerts a downwardly biasing force on the spring seat bracket 30 and control arms 20 and 22 when the vehicle is at rest.

Referring now to Figure 4, when the control arms 20 and 22 undergo jounce movement, the arms 20 and 22 pivot upwardly about the inboard bushings 32 and 35. As the arms 20 and 22 pivot upwardly, the spring seat bracket 30 is moved upward with the arms 20 and 22 to compress coil spring 31. In addition, the spring seat bracket 30 pivots about bushings 54 and 56 to remain in a near horizontal position.

Similarly, as shown in Figure 5, when the control arms 20 and 22 undergo rebound movement and pivot downwardly about inboard bushings 32 and 35, the bracket 30 pivots about bushings 54 and 56 to maintain its near horizontal position as it moves downwardly and allows coil spring 31 to elongate.

Arms 20 and 22 and the other suspension components may be arranged to provide an increase in toe-in during jounce of wheel 12. Alternatively, no toe angle change during jounce of the wheel 12 or a toe-out of the wheel 12 may be desired during jounce. One skilled in the art can provide the appropriate geometry of the various suspension arms that will provide the desired toe angle dynamics during jounce.

The plurality of resilient bushings in the suspension system allow the road wheel to recess when subjected to a longitudinal force such as occurs when the wheel strikes a road obstacle (e.g., a tar strip in concrete pavement). As shown in Figure 3, the control arms 20 and 22 control the toe angle of the rear wheel 12 during recession of the wheel. Arms 20 and 22 and the other suspension components may be arranged to provide no toe change during recession of the wheel. Alternatively, the arms 20 and 22 may be arranged to provide toe-in as the wheel undergoes recession. The elastomeric bushings 54 and 56 that mount the spring bracket 30 to the control arms are resilient to allow the spring seat bracket 30 to pivot with respect to the control arms 20 and 22 about vertical axes when the rear wheel 12 undergoes recession. When the wheel 12 regains its normal position, as shown in Figure 2, the spring seat bracket 30 under the biasing influence of elastomeric bushings 54 and 56 pivots back to its initial position.

In other words, the spring seat bracket does not interfere with the vertical or horizontal movement of the control arms. Thusly the spring bracket does not interfere with the toe angle of wheel 12 controlled by the control arms 20 and 22 during roll of the vehicle or recession of the wheel.

Another advantage provided for in the suspension 16 is the interposition of bushing 54 and 56 between the spring 31 and the control arms 20 and 22. The bushings 54 and 54 can absorb small high frequency vibrations which may otherwise pass from the control arms to the spring 31 and up to the chassis 10. As also shown in the figures, the position of the spring near the control arms rather than about strut 26 provides for increased cargo or engine space since the clearance about strut 26 can be minimized.

Furthermore, because the spring loads arms 20 and 22 and not mount 46, softer rubber can be used in upper mount 46 than would otherwise be feasible. The force of spring 31 is directed to both arms 20 and 22 in equal amounts. The arms, by being connected to the wheel support member 28 on opposite sides of the spindle 45, produce virtually no torque on the wheel support member. The even distribution of the spring force on the wheel support member promotes a vibration free ride.

Reference now will be made to Figures 7—9 which disclose a second, third, and fourth embodiment. To simplify the discussion, parts that are identical to parts described in the first embodiment are referred to with the same numeral.

The second embodiment, shown in Figure 7, has a central spring seat plate 80 which seats the lower end 58 of coil spring 31. The spring seat plate 80 has two apertures 82 near each end thereof which receive vertically extending supports 84 having threaded lower ends 86. The threaded ends 86 are secured to the plate 80 by nuts 88. The top end 89 of each support 84 is adapted to receive the bushings 54 and 56 which are pivotably mounted to the control arms 20 and 22 in the same fashion as the first embodiment.

The third embodiment shown in Figure 8 has an air spring 100 interposed between the chassis 10 and an air spring piston 101 that is secured onto the bracket 103. The bracket 103 is secured to the control arms 20 and 22 in the same fashion as the first embodiment.

The fourth embodiment shown in Figure 9 has a spring seat bracket 111 that has a downwardly extending central basket portion 113. The basket portion 113 has at its bottom end a spring seat 114 which seats the coil spring 31. The outer ends of the bracket 111 are seated on two elastomeric bushings 154 and 156 which in turn sit on the top wall 171 of each control arm 120 and 122. The top wall 171 of each control arm 120 and 122, each bushing 154 and 156, and each end of bracket 111 have apertures 121, 123 and 125 therethrough respectively which are aligned with each other to receive bolts 127. Bolts 127 have nuts 129 fastened thereto to secure the bracket 111 to the control arms 120 and 122 via bushings 154 and 156.

In this fashion, the suspension as described provides for increased cargo or engine space, a means of vibration isolation between the control arms and the spring, allows softer rubber to be used in the strut upper mount, and can be constructed to provide roll understeer, roll oversteer, or roll neutral steer, as well as wheel recession.

### Claims

1. An independent rear wheel suspension for a vehicle comprising a chassis (10), a wheel support member (28) for rotatably mounting a wheel, a front control arm (20) and a rear control arm (22), each of said control arms (20, 22) extending transversely with respect to the longitudinal axis of the vehicle and being pivotably connected at its inboard end to said chassis (10) and at its outboard end to said wheel support member (28), said wheel support member (28) supporting said wheel at a position longitudinally between where the outboard ends of said arms (20, 22) are connected to the wheel support member (28), characterised in that a spring seat (30) is located between said control arms (20, 22) and the suspension seats a compression spring (31) interposed between said spring seat (30) and said chassis (10), and pivot means (66) extending through bushing means (54, 56) is secured within openings (62, 64) formed at the ends of upwardly extending arms (60, 61) of the spring seat (30), said pivot means (66) pivotably connecting said spring seat (30) to control arms (20, 22) so as to allow said control arms (20, 22) to move relative to said spring seat (30) about a substantially vertical axis, said bushing means (54, 56) being constructed to allow pivotable movement of said spring seat (30) about a substantially longitudinally extending axis, and to resiliently resist pivotable movement of said spring seat (30) about a vertical axis and said spring seat (30) being pivoted with respect to the control arms (20, 22) such that the spring seat (30) remains in a substantially horizontal position when the control arms (20, 22) undergo jounce and rebound movement.

2. An independent rear wheel suspension as claimed in Claim 1, further comprising a longitudinal link (24) having one end connected to said chassis (10) and its other end connected to said wheel support member (28).

3. An independent rear wheel suspension as claimed in Claim 1 or 2, further comprising an upwardly extending shock absorber (26) having its lower end rigidly secured to said wheel support member (28) and pivotably connected to the chassis (10) at its upper end.

4. An independent rear wheel suspension as claimed in any preceding claim, wherein the compression spring is an air spring (100), and the seat (103) includes a piston member (101) operably engaging the air spring (100) interposed between said piston (101) and said chassis.

### Patentansprüche

1. Eine unabhängige Hinterradaufhängung für ein Fahrzeug, umfassend ein Chassis (10), ein Radträgerelement (28), das so ausgeführt ist, daß ein Rad daran drehbar befestigt werden kann, einen vorderen Querlenker (20) und einen hinteren Querlenker (22), wobei jeder der genannten Querlenker (20, 22) quer zur Längsachse des Fahrzeugs verläuft und in schwenkbarer Ausführung an seinem innenliegenden Ende mit dem genannten Chassis (10) und an seinen außenliegenden Ende mit dem genannten Radträgerelement (28) verbunden ist, wobei das genannte Radträgerelement (28) das genannte Rad an einer Stelle abstützt, die in Längsrichtung zwischen der Verbindung der außenliegenden Enden der genannten Querträger (20, 22) mit dem Radträgerelement (28) liegt, dadurch gekennzeichnet, daß ein Federsitz (20) zwischen den genannten Querträgern (20, 22) angeordnet ist, und die Aufhängung auf einer Druckfeder (31) aufliegt, die zwischen dem genannten Federsitz (30) und dem genannten Chassis (10) angebracht ist, und daß die Schwenkvorrichtungen (66), die durch die Buchsen (54, 56) verlaufen, innerhalb der Öffnungen (62, 64) befestigt sind, die sich an den Enden der sich nach oben erstreckenden Arme (60, 61) des Federsitzes (30) befinden, wobei die genannten Schwenkvorrichtungen (66) eine schwenkbare Verbindung zwischen dem genannten Federsitz (30) und den Querträgern (20, 22) herstellen, um es so den genannten Querträgern (20, 22) zu ermöglichen, sich im Verhältnis zum genannten Federsitz (30) um eine im wesentlichen vertikale Achse zu bewegen, wobei die genannten Buchsen (54, 56) so ausgeführt sind daß sie eine Schwenkbewegung des genannten Federsitzes (30) um eine sich im wesentlichen in Längsrichtung erstreckende Achse ermöglichen und in elastischer Weise einer Schwenkbewegung des genannten Federsitzes (30) um eine vertikale Achse widerstehen, und wobei der genannte Federsitz (30) im Verhältnis zu den Querträgern (20, 22) eine derartige Schwenkbewegung ausführt, daß der Federsitz (30) in einer im wesentlichen horizontalen Position verbleibt, wenn die Querträger (20, 22) einer Ein- und Ausfederungsbewegung ausgesetzt sind.

2. Eine unabhängige Hinterradaufhängung gemäß Anspruch 1, weiterhin umfassend eine länglich ausgeführte Strebe (24), wobei das eine Ende der Strebe mit dem genannten Chassis (10) und das andere Ende mit dem genannten Radträgerelement (28) verbunden ist.

3. Eine unabhängige Hinterradaufhängung gemäß Anspruch 1 oder 2, weiterhin umfassend einen nach oben verlaufenden Stoßdämpfer (26), dessen unteres Ende mit dem genannten Radträgerelement (28) fest verbunden und dessen oberes Ende schwenkbar mit dem Chassis (10) verbunden ist.

4. Eine unabhängige Hinterradaufhängung gemäß irgendeinem der vorstehenden Ansprüche, wobei es sich bei der Druckfeder um eine Luftfeder (100) handelt, und wobei der Sitz (103) ein Kolbenelement (101) umfaßt, das in betriebsfähigem Eingriff zur Luftfeder (100) steht, die zwischen dem genannten Kolben (101) und dem genannten Chassis angeordnet ist.

**Revendications**

1. Suspension indépendante de roue arrière pour véhicule comprenant un châssis (10), un organe de support de roue (28) permettant le montage en rotation d'une roue, un bras avant de contrôle (20) et un bras arrière de contrôle (22), chacun de ces bras de contrôle (20, 22) s'étendant transversalement par rapport à l'axe longitudinal du véhicule et étant relié de manière pivotante sur le châssis (10) à son extrémité intérieure et sur l'organe de support de roue (28) à son extrémité extérieure, cet organe de support de roue (28) supportant la roue en une position située dans le sens longitudinal entre les emplacements où les extrémités extérieures desdits bras (20, 22) sont reliées à cet organe de support de roue (28), caractérisée en ce qu'un appui de ressort de suspension (30) est disposé entre les bras de contrôle (20, 22) et la suspension assure l'appui d'un ressort de compression (31) qui est interposé entre ledit appui de ressort de suspension (30) et le châssis (10), tandis que des moyens de pivotement (66) traversant des douilles (54, 56) sont fixés à l'intérieur d'ouvertures (62, 64) ménagées aux extrémités de bras (60, 61) de l'appui de ressort de suspension (30) qui s'étendent vers le haut, ces moyens de pivotement (66) reliant de manière pivotante ledit appui de ressort de suspension (30) aux bras de contrôle (20, 22) de manière à permettre à ces bras de contrôle (20, 22) de se déplacer par rapport à cet appui de ressort de suspension (30) autour d'un axe sensiblement vertical, lesdites douilles (54, 56) étant agencées de manière à permettre un déplacement en pivotement de l'appui de ressort de suspension (30) autour d'un axe s'étendant de manière sensiblement longitudinale, et de façon à résister de manière élastique à un déplacement en pivotement de cet appui de ressort de suspension (30) autour d'un axe vertical, tandis que ce même appui de ressort de suspension (30) pivote par rapport aux bras de contrôle (20, 22) d'une façon telle que cet appui (30) demeure dans une position sensiblement horizontale lorsque les bras de contrôle (20, 22) subissent un mouvement de descente et de rebondissement.

2. Suspension indépendante de roue arrière telle que revendiquée dans la revendication 1, comprenant en outre un bras longitudinal (24) présentant une extrémité reliée au châssis (10) et son autre extrémité reliée à l'organe de support de roue (28).

3. Suspension indépendante de roue arrière telle que revendiquée dans la revendication 1 ou 2, comprenant en outre un amortisseur de chocs s'étendant vers le haut (26) qui présente son extrémité inférieure fixée à demeure sur l'organe de support de roue (28) et est relié de manière pivotante au châssis (10) à son extrémité supérieure.

4. Suspension indépendante de roue arrière telle que revendiquée dans une revendication précédente quelconque dans laquelle le ressort de compression est un ressort pneumatique (100) et l'appui (103) comprend un piston (101) qui attaque en coopération fonctionnelle le ressort pneumatique (100) interposé entre ce piston (101) et le châssis.

FIG.9

FIG.1

FIG.2

FIG.3

FIG.4

FIG.5

FIG.6

FIG.7

FIG.8